# EUROPEAN PATENT APPLICATION

(11) **EP 3 093 693 A1**
(43) Date of publication of application: **16.11.2016**
(21) Application number: 14877275.9
(22) Date of filing: 06.01.2014
(51) Int. Cl.: G02B 5/02, G06F 3/033

(54) **OPTICAL FILM AND DIGITAL PEN SYSTEM USING SAME**

(71) Applicant: Pen Generations, Inc., Seongnam-si, Gyeonggi-do 463-400 (KR)
(72) Inventor: KANG, Yong Hoon, Seoul 140-100 (KR)
(74) Representative: Schiweck, Weinzierl & Koch
(86) International application number: PCT/KR2014/000088
(87) International publication number: WO 2015/102137

(57) **Abstract**

Provided are an optical film and a digital pen system including the same. The optical film includes a film layer having fine structures thereon, a coating layer coated on the fine structures to form a dot pattern and having a feature of scattering infrared light, and a matching layer stacked above or below the film layer and having a refractive index matched to a refractive index of the film layer within a predetermined range of errors.

## Description

### [Technical Field]

The present invention relates to an optical film and a digital pen system using the same, and more particularly, to a high-luminance optical film attached to a display and a digital pen system capable of providing location information using the same.

### [Background Art]

A digital pen system is a pen of a new concept which is a combination of analog and digital technologies, and is designed to store contents in a memory included therein and manage the stored contents by transmitting the stored contents in the form of an image file to a computer when the contents are written on paper with this pen in a similar manner in which the contents are written with a general pen. Although a document written with a general pen may be also stored in the form of an image file by scanning the document by a scanner (an electronic color separator), a document written with an electronic pen need not be scanned and may be easily managed using an additional program. Digital pens developed at an initial stage should be connected to a computer to use them. That is, in order to use the digital pens, a computer should be always powered on and the digital pens can be used only near the computer. Furthermore, when an image file is stored in a computer, the resolution of the image file is low and is thus difficult to be exactly recognized.

Recently, a high-functional digital pen capable of storing contents which are written down in a memory included therein and converting the contents into digital data whenever this pen is connected to a computer has been on the market. Furthermore, a digital pen capable of wirelessly transmitting data without being connected to a cable has been developed, as well as a digital pen including a liquid crystal display therein, so that contents that are written down may be directly viewed on a display thereof. In addition, a touch screen method of sensing location information of a digital pen on a display, a technique of sensing the trajectory of movement of a digital pen by installing a sensor in an outside area, and the like have been employed.

In order to use a digital pen, a transparent film having a dot pattern thereon should have a feature of scattering infrared light. However, the transparent film scatters not only infrared light but also visible light. Thus, when the transparent film is attached to a display, an image may be distorted and furthermore the visibility of the image may be lowered to blur the image.

In addition, since additional elements should be added to form the dot pattern, the number of processes or costs may increase.

A technique of sensing a location touched by a digital pen using an infrared sensor installed in the digital pen and displaying graphic information on the sensed location is disclosed in many patents including Korean Laid-Open Patent Publication No. 10-2010-0134331. However, in Korean Laid-Open Patent Publication No. 10-2010-0134331, an optical film is manufactured using a material capable of reflecting infrared light and visible light so that marks on the optical film may be recognized by the digital pen. Thus, when the optical film is attached to a display, the whole definition and visibility of images are low.

### [Disclosure]

### [Technical Problem]

The present invention is directed to an optical film which is capable of transmitting visible light while maintaining a feature of scattering infrared light to minimize influences on a display function of a display on which a digital pen is used when the optical film is attached to the display, which is integrally formed with a dot pattern to minimize the number of processes and manufacturing costs, and which improves the visibility of images; and a digital pen system using the optical film.

### [Technical Solution]

One aspect of the present invention provides an optical film including a film layer having fine structures thereon, and a coating layer coated on the fine structures to form a dot pattern and having a feature of scattering infrared light.

The optical film may further include a matching layer stacked above or below the film layer and having a refractive index matched to a refractive index of the film layer within a predetermined range of errors.

The dot pattern may include virtual grid lines, and marks.

Portions of the coating layer on which the marks are to be formed may be etched to form the dot pattern.

Portions of the coating layer other than the portions on which the marks are to be formed may be etched to form the dot pattern.

The coating layer may be formed by cross-stacking at least two material layers having different refractive indexes, and a refractive index of the coating layer may be determined by refractive indexes of the at least two material layers.

The coating layer may have a function of reflecting infrared light having a wavelength of 800 nm to 1500 nm.

One surface of the matching layer and one surface of film layer may be in contact with each other, and an adhesive may be applied onto another surface of at least one of the matching layer and the film layer.

The fine structures may have a hemispherical shape, a reversed hemispherical shape, a prism shape, or a triangular pyramid shape.

Another aspect of the present invention provides a digital pen system including a display, an optical film provided on the display, and a digital pen configured to recognize a dot pattern and transmit a signal for displaying graphic information on the display. The optical film includes a film layer having fine structures thereon, and a coating layer coated on the fine structures to form the dot pattern and having a feature of scattering infrared light.

The optical film may further include a matching layer stacked above or below the film layer and having a refractive index matched to a refractive index of the film layer within a predetermined range of errors.

The dot pattern may include virtual grid lines, and marks.

Portions of the coating layer on which the marks are to be formed may be etched to form the dot pattern.

Portions of the coating layer other than the portions on which the marks are to be formed may be etched to form the dot pattern.

### [Advantageous Effects]

According to an exemplary embodiment of the present invention, an optical film which is capable of transmitting visible light while maintaining a feature of scattering infrared light to minimize influences on a display function of a display on which a digital pen is used when the optical film is attached to the display, which is integrally formed with a dot pattern to minimize the number of processes and manufacturing costs, and which improves the visibility of images; and a digital pen system using the optical film are provided.

### [Description of Drawings]

FIG. 1 is a cross-sectional view of an optical film according to one exemplary embodiment of the present invention.
FIG. 2 is a cross-sectional view of an optical film according to another exemplary embodiment of the present invention.
FIG. 3 is a cross-sectional view of an optical film according to another exemplary embodiment of the present invention.
FIG. 4 is a diagram illustrating a dot pattern according to one exemplary embodiment of the present invention.
FIG. 5 is a plan view of a coating layer according to one exemplary embodiment of the present invention.
FIG. 6 is a mimetic diagram illustrating refractive-index matching of an optical film according to one exemplary embodiment of the present invention.
FIG. 7 is a plan view of a coating layer according to another exemplary embodiment of the present invention.
FIG. 8 is a mimetic diagram illustrating refractive-index matching of an optical film according to another exemplary embodiment of the present invention.
FIG. 9 is a cross-sectional view of an optical film according to another exemplary embodiment of the present invention.
FIG. 10 is a conceptual diagram of a digital pen system according to one exemplary embodiment of the present invention.
FIG. 11 is a schematic diagram illustrating a dot pattern according to one exemplary embodiment of the present invention.

### [Modes of the Invention]

Hereinafter, exemplary embodiments of the present invention will be described in detail. However, the present invention is not limited to the exemplary embodiments disclosed below, but can be implemented in various forms. The following exemplary embodiments are described in order to enable those of ordinary skill in the art to embody and practice the invention.

The present invention may be embodied in many different forms and accomplished in various embodiments. Thus, exemplary embodiments of the present invention will be illustrated in the drawings and described herein. However, the present invention is not limited thereto and these exemplary embodiments should be understood to cover all modifications, equivalents, and alternatives falling within the technical idea and scope of the invention.

It will be understood that, although the terms 'first', 'second,' etc. may be used herein to describe various elements, these elements should not be limited by these terms. These terms are only used to distinguish one element from another. For example, a first element could be termed a second element, and, similarly, a second element could be termed a first element, without departing from the scope of the present invention. As used here, the term 'and/or' includes any and all combinations of one or more of the associated listed items.

It will be understood that when an element is referred to as being 'connected' or 'coupled' to another element, it can be directly connected or coupled to the other element or intervening elements may be present. In contrast, when an element is referred to as being 'directly connected' or 'directly coupled' to another element, there are no intervening elements present.

The terminology used herein is for the purpose of describing particular embodiments only and is not intended to be limiting of the invention. As used herein, the singular forms 'a,' 'an' and 'the' are intended to include the plural forms as well, unless the context clearly indicates otherwise. It will be further understood that the terms 'comprise,' 'comprising,' 'include' and/or 'including,' when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined here.

Hereinafter, exemplary embodiments of the present invention will be described in detail with reference to the accompanying drawings. Throughout the drawings, the same or corresponding elements will be assigned the same reference numerals and will not be thus redundantly described here.

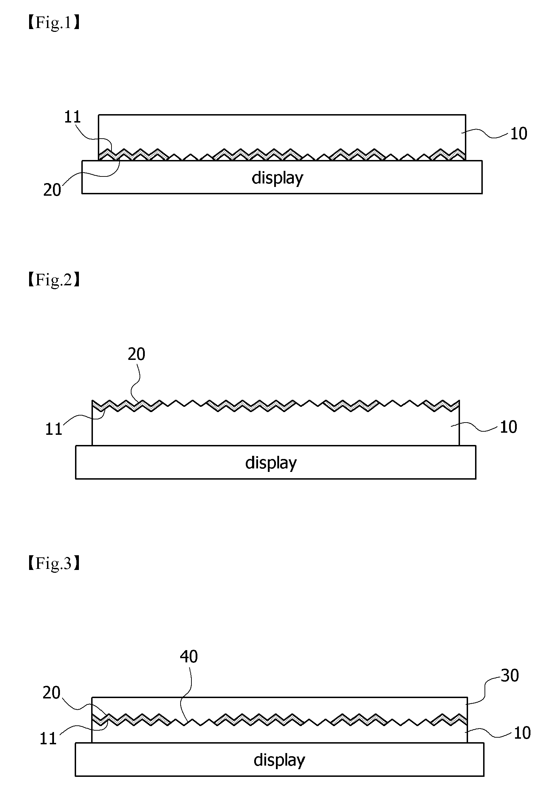

FIG. 1 is a cross-sectional view of an optical film according to one exemplary embodiment of the present invention.

Referring to FIG. 1, an optical film according to one exemplary embodiment of the present invention may include a film layer 10 having fine structures 11 thereon, and a coating layer 20 coated on the fine structures 11 to form a dot pattern 40 and having a feature of scattering infrared light.

First, the film layer 10 may be formed of a transparent material which transmits light incident on the optical film. For example, the film layer 10 may be formed of at least one material selected from the group consisting of glass, polyethylene terephthalate (PET), polycarbonate (PC), polyethylene naphthalate (PEN), co-polyethylene naphthalate (co-PEN), polystyrene (PS), polymethyl methacrylate (PMMA), polybutylene terephthalate (PBT), polypropylene (PP), polyethylene (PE), etc.

The fine structures 11 may be formed on a top surface of the film layer 10.

The fine structures 11 may be formed by structuring the top surface of the film layer 10 or formed by stacking an additional structure such as glass beads on the top surface of the film layer 10 using an adhesive.

The fine structures 11 may have a hemispherical shape, a reversed hemispherical shape, a prism shape, a triangular pyramid shape, or a shape similar thereto.

The fine structures 11 may be formed to have a light-directing feature. The light-directing feature of the fine structures 11 may include, for example, a rotating, diffusing, refracting, or reflecting feature.

The coating layer 20 may be coated onto the fine structures 11 to form the dot pattern 40, and have a feature of scattering infrared light.

The coating layer 20 may be formed by cross-stacking transparent dielectric film materials and may thus have a function of reflecting infrared light.

The transparent dielectric film materials may include at least one dielectric material among a zinc oxide, a tin oxide, an indium oxide, a bismuth oxide, a titanium oxide, a hafnium oxide, a zirconium oxide, an alloy thereof, a silicon nitride, and a silicon oxynitride.

The coating layer 20 may reflect or scatter infrared light having a wavelength of 800 nm to 1500 nm at a high rate and transmit visible light due to the cross-stacked transparent dielectric materials.

The dot pattern 40 may be formed by partially etching some regions of the coating layer 20 to form marks 41.

The partially etching of some regions of the coating layer 20 may be performed by, for example, photolithography or wet etching.

According to an exemplary embodiment of the present invention, the coating layer 20 and a display are in direct contact with each other, thereby minimizing a decrease in the visibility of images. The fine structures 11 of the coating layer 20 may scatter visible light and serves as a light source, thereby preventing a screen of the display from blurring.

A distance between the fine structures 11 may be substantially the same as or less than the size of each pixel of the display.

FIG. 2 is a cross-sectional view of an optical film according to another exemplary embodiment of the present invention.

Referring to FIG. 2, a coating layer 20 is not in directly contact with a display and thus an anti-reflection function and a function of preventing fingerprints from being left may be further realized by fine structures 11.

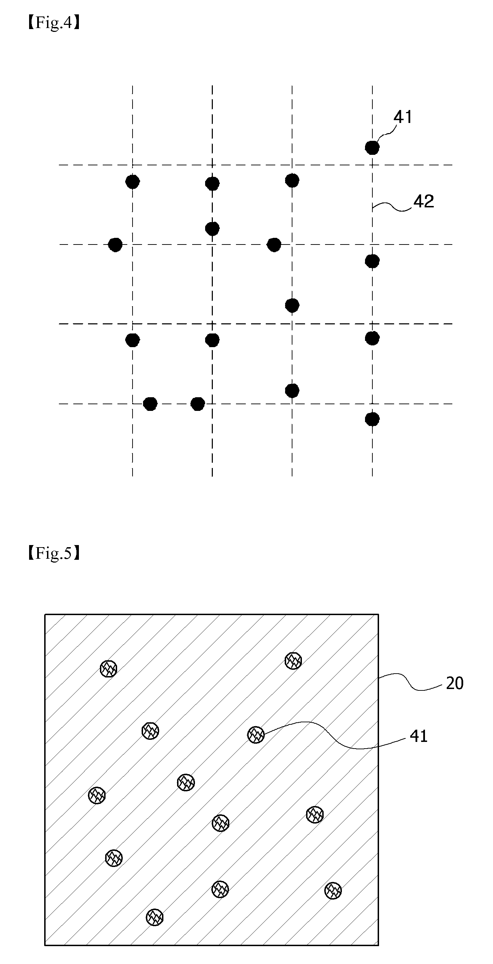

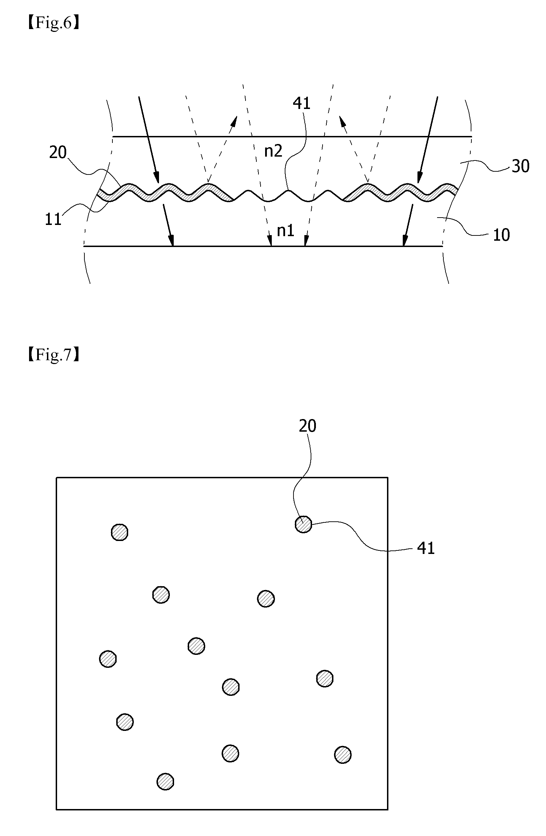

FIG. 3 is a cross-sectional view of an optical film according to another exemplary embodiment of the present invention. FIG. 4 is a diagram illustrating a dot pattern according to one exemplary embodiment of the present invention. FIG. 5 is a plan view of a coating layer according to one exemplary embodiment of the present invention. FIG. 6 is a mimetic diagram illustrating refractive-index matching of an optical film according to one exemplary embodiment of the present invention.

Referring to FIG. 3, the optical film according to another exemplary embodiment of the present invention may include a film layer 10 having fine structures 11 thereon, a coating layer 20 coated onto the fine structures 11 to form a dot pattern 40 and having a feature of scattering infrared light, and a matching layer 30 which is stacked above the film layer 10 and the refractive index of which is matched to that of the film layer 10 within a predetermined range of errors.

First, the film layer 10 may include a transparent material which transmits light incident on the optical film. For example, the film layer 10 may include at least one material selected from the group consisting of glass, polyethylene terephthalate (PET), polycarbonate (PC), polyethylene naphthalate (PEN), co-polyethylene naphthalate (co-PEN), polystyrene (PS), polymethyl methacrylate (PMMA), polybutylene terephthalate (PBT), polypropylene (PP), polyethylene (PE), etc.

The fine structures 11 may be formed on a top surface of the film layer 10.

The fine structures 11 may be formed by structuring the top surface of the film layer 10 or by stacking an additional structure such as glass beads on the top surface of the film layer 10 using an adhesive.

The fine structures 11 may have a hemispherical shape, a reversed hemispherical shape, a prism shape, a triangular pyramid shape, or a shape similar thereto.

The fine structures 11 may be formed to have a light-directing feature. The light-directing feature of the fine structures 11 may include, for example, a rotating, diffusing, refracting, or reflecting feature.

The coating layer 20 may be coated onto the fine structures 11 to form the dot pattern 40, and have a feature of scattering infrared light.

The coating layer 20 may be formed by cross-stacking transparent dielectric film materials and may thus have a function of reflecting infrared light.

The transparent dielectric film materials may include at least one dielectric material among a zinc oxide, a tin oxide, an indium oxide, a bismuth oxide, a titanium oxide, a hafnium oxide, a zirconium oxide, an alloy thereof, a silicon nitride, and a silicon oxynitride.

The coating layer 20 may reflect or scatter infrared light having a wavelength of 800 nm to 1500 nm at a high rate and transmit visible light due to the cross-stacked transparent dielectric film materials.

The dot pattern 40 may be formed by partially etching some regions of the coating layer 20 to form marks 41.

Referring to FIG. 4, the dot pattern 40 includes virtual grid lines 42 and the marks 41, and the marks 41 may be formed to be spaced a predetermined distance from points of intersection of the virtual grid lines 42. Each of the marks 41 may provide location information on the basis of a pattern value determined by a location determined with respect to one of the points of intersections of the virtual grid lines 42. The marks 41 may be spaced the predetermined distance from the points of intersections of the virtual grid lines 42, and respectively have mark values. Each of the mark values may be a combination of at least two different numbers. The marks 41 may have various shapes, e.g., a circular shape, an oval shape, a polygonal shape, a straight-line shape, etc. The same type of marks may be used in one optical film.

Referring to FIG. 5, the marks 41 are formed by partially etching a surface of the coating layer 20.

Thus, regions on the coating layer 20 which is coated on all surfaces of the film layer 10 and on which the marks 41 are to be formed are partially etched so that infrared light is transmitted via the regions of the coating layer 20 on which the marks 41 are formed.

The partially etching of the coating layer 20 may be performed by, for example, photolithography or wet etching.

The matching layer 30 is stacked above the film layer 10 having the fine structures 11 thereon and has the same refractive index as that of the film layer 10 having the fine structures 11 within a predetermined range of errors. The matching layer 30 may include at least one material selected from the group consisting of glass, polyethylene terephthalate (PET), polycarbonate (PC), polyethylene naphthalate (PEN), co-polyethylene naphthalate (co-PEN), polystyrene (PS), polymethyl methacrylate (PMMA), polybutylene terephthalate (PBT), polypropylene (PP), polyethylene (PE), etc.

Alternatively, the matching layer 30 may include a silicon or acryl-based adhesive composition. In this case, even if an additional adhesive is not applied, the optical film may be combined onto a display due to the matching layer 30. Alternatively, compositions other than the silicon or acryl-based adhesive composition are applicable to the optical film according to an exemplary embodiment of the present invention, provided that they are generally used in the field of optical film.

One surface of the film layer 10 on which the fine structures 11 are formed is in directly contact with the matching layer 30 and an adhesive may be applied on another surface thereof. The adhesive may include a silicon or acryl-based adhesive composition and be applied to the surface of the film layer 10 on which the fine structures 11 are formed but may be integrally formed with the film layer 10 having the fine structures 11 thereon using some materials of the film layer 10.

Alternatively, the optical film may be in the form of a film in which an adhesive is applied on opposite surfaces thereof so that it may be easily attached to a display.

Referring to FIG. 6, when a refractive index of the film layer 10 having the fine structures 11 thereon is *n1* and a refractive index of the matching layer 30 is *n2*, the refractive indexes *n1* and *n2* may be the same or substantially the same within a predetermined range of errors.

Thus, infrared light is reflected from a surface of the coating layer 20 and visible light is transmitted therethrough, but the infrared light is not reflected but is transmitted through the partially etched regions of which the coating layer 20 on which the marks 41 are formed and thus arrives at the display at the bottom of the film layer 10.

That is, visible light incident on the optical film passes through the matching layer 30 and the film layer 10 having the same or substantially the same refractive index, and thus the rate of scattering the visible light at a surface of the optical film may be minimized. However, infrared light incident on the optical film together with the visible light is reflected and scattered due to the features of the shapes of the coating layer 20 and the fine structures 11. Thus, distortion of an image displayed on the display may be minimized, the visibility of the image may be enhanced, and furthermore, a pattern recognition function of a digital pen may be provided.

However, some regions of the coating layer 20 are etched to form the marks 41, and infrared light is not reflected and is transmitted through the regions of the coating layer 20 having the marks 41 thereon and thus arrives at the display at the bottom of the film layer 10.

Thus, the contrast of a region of the display at which the infrared light arrives may change and the difference between the contrasts of this region and the vicinity thereof may be recognized by a digital pen (not shown). Accordingly, a dot pattern as illustrated in FIG. 2 may be recognized.

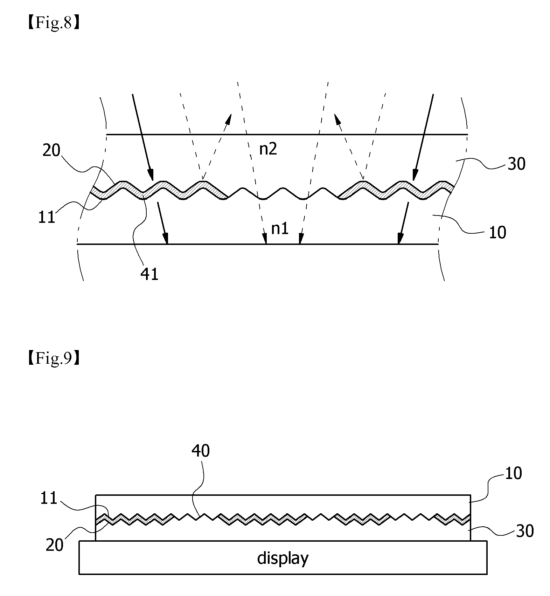

FIG. 7 is a plan view of a coating layer according to another exemplary embodiment of the present invention. FIG. 8 is a mimetic diagram illustrating refractive-index matching of an optical film according to another exemplary embodiment of the present invention.

Referring to FIG. 7, a dot pattern 40 is formed by partially etching regions of a surface of a coating layer 20 other than regions thereof on which marks 41 are to be formed Referring to FIG. 8, infrared light is reflected from the surface of the coating layer 20 on which the marks 41 are to be formed and visible light is transmitted therethrough, but the infrared light is not reflected and is transmitted through the partially etched regions of the coating layer 20 and thus arrives at a display at a bottom of a film layer 10.

FIG. 9 is a cross-sectional view of an optical film according to yet another exemplary embodiment of the present invention.

Referring to FIG. 9, the optical film according to yet another exemplary embodiment of the present invention may include a matching layer 30 having a refractive index matched to that of a film layer 10 within a predetermined range of errors, the film layer 10 stacked above the matching layer 30 and having fine structures 11 at a bottom thereof, and a coating layer 20 coated on the fine structures 11 to form a dot pattern 40 and having a feature of scattering infrared light.

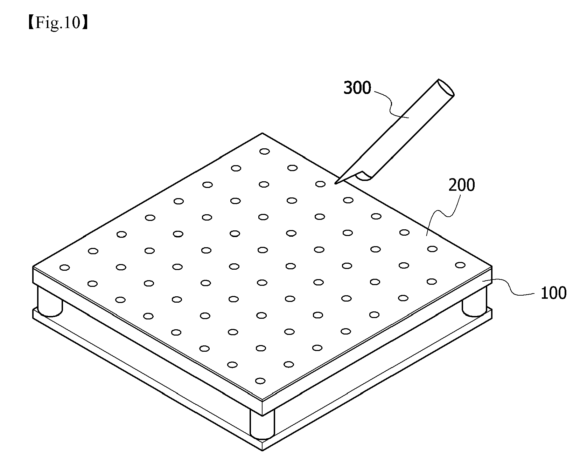

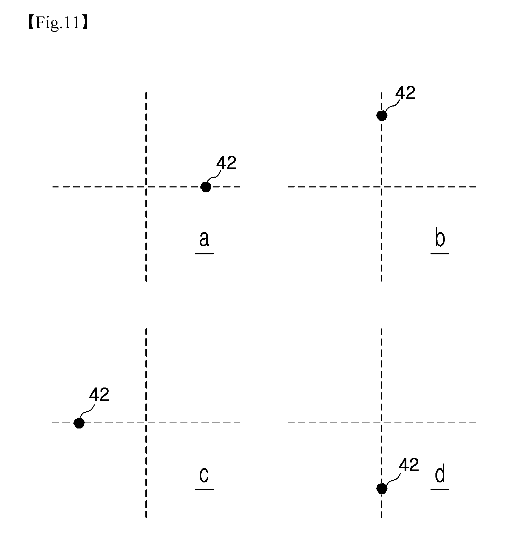

FIG. 10 is a conceptual diagram of a digital pen system according to one exemplary embodiment of the present invention. FIG. 11 is a schematic diagram illustrating a dot pattern according to one exemplary embodiment of the present invention.

Referring to FIG. 10, a digital pen system according to one exemplary embodiment of the present invention may include a display 100; an optical film 200 including a film layer provided on the display 100 and having fine structures thereon, a coating layer coated on the fine structures to form a dot pattern and having a feature of scattering infrared light, and a matching layer stacked above or below the film layer and having a refractive index matched to that of the film layer within a predetermined range of errors; and a digital pen 300 which recognizes the dot pattern and transmits a signal for displaying graphic information on the display 100.

The display 100 may be a transmission type display or a reflection type display. In the case of the transmission type display, the digital pen 300 may sense location information of the dot pattern 40using visible light and infrared light emitted from a backlight unit. Alternatively, when the transmission type display does not emit an infrared light sourceor emits an infrared light source which is too weak to recognize the location information of the dot pattern, an infrared light source (not shown) mounted in the digital pen 300 may be used.

In the case of the reflection type display, since an external light source is reflected forward from a surface of the display 100, information may be displayed on an outside region without a backlight unit and the digital pen 300 may sense location information using the reflected light.

The digital pen 300 may have a shape of a general pen, and include an infrared light sensor (not shown) on a pen point portion thereof. The infrared light sensor may recognize the dot pattern 40 formed on the optical film 200. The digital pen 300 may calculate a pattern value according to the dot pattern 40 recognized by the infrared light sensor and calculate location information in the optical film 200.

Referring to FIG. 11, the dot pattern 40 formed on the coating layer may include virtual grid lines 42 and marks 41.

For example, the dot pattern 40 may be formed by partially etching regions of the coating layer on which the marks 41 are to be formed.

Alternatively, the dot pattern 40 may be formed by partially etching regions of the coating layer other than the regions thereof on which the marks 41 are to be formed.

The marks 41 may be present on four locations according to the relation between the marks 41 and points of intersection of the virtual grid lines 42. The marks 41 may have a mark value '1' when they are located in a right direction of the points of intersection of the virtual grid lines 42 (see a case a), have a mark value '2' when they are located in an upward direction of the points of intersection of the virtual grid lines 42 (see a case b), may have a mark value '3' when they are located in a left direction of the points of intersection of the virtual grid lines 42 (see a case c), and may have a mark value '4' when they are located in a downward direction of the points of intersection of the virtual grid lines 42 (see a case d). Thus, location information may be provided based on the positions of the marks 41 with respect to the points of intersection of the virtual grid lines 42.

Alternatively, the marks 41 may be formed in a diagonal direction rather than on the virtual grid lines 42, and a plurality of marks 41 may be formed on one point of intersection of the virtual grid lines 42 to provide location information. In this case, mark values of the marks 41 may be expressed using arbitrary coordinates, e.g., x and y coordinates, and location information may be provided from the mark values expressed using the coordinates.

The virtual grid lines 42 may be formed in vertical and horizontal directions to be spaced a certain distance from one another. The distances between the virtual grid lines 42 may be 250 to 300 µm, and the marks 41 may be formed on positions away by a distance of 1/4 or 1/8 of the length of the virtual grid lines 42 from the points of intersection of the virtual grid lines 42. Alternatively, the marks 41 may be formed such that two or more marks 41 are related to one another with respect to the points of intersection of the virtual grid lines 42.

For example, when in the digital pen 300, the infrared light sensor recognizes thirty six marks 41, i.e., 6×6 marks 41 in width and height, on 6×6 grid lines 42, location information may be calculated according to mark values of the thirty six marks 41 and an absolute position on the optical film 200 may be detected using the location information.

Although FIG. 11 illustrates a case in which location information on the optical film 200 is calculated by recognizing the dot pattern 40 including the virtual grid lines 42 and the marks 41, it would be apparent to those of ordinary skill in the art that the optical film 200 is also applicable to various types of digital pen systems capable of calculating location information using a random pattern formed on the optical film 200.

A device capable of performing various functions of a communication device, a microphone, a speaker, etc. may be installed in the digital pen 300, and operations of the digital pen 300 may be controlled by a micro-controller unit (MCU) included in the digital pen 300. Furthermore, ink is contained in the pen point portion of the digital pen 300 and thus the digital pen 300 may perform functions of a general pen, and an optical film having an information pattern thereon may be attached and used on a note, a board, or an electronic blackboard capable of displaying information by reflecting external light.

While the present invention has been particularly shown and described with reference to exemplary embodiments thereof, it will be understood by those of ordinary skill in the art that various changes in form and details may be made therein without departing from the spirit and scope of the invention as defined by the appended claims.

## Claims

1. An optical film comprising:
a film layer having fine structures thereon; and
a coating layer coated on the fine structures to form a dot pattern, and having a feature of scattering infrared light.

2. The optical film of claim 1, further comprising a matching layer stacked above or below the film layer and having a refractive index matched to a refractive index of the film layer within a predetermined range of errors.

3. The optical film of claim 1, wherein the dot pattern comprises:
virtual grid lines; and
marks.

4. The optical film of claim 3, wherein portions of the coating layer on which the marks are to be formed are etched to form the dot pattern.

5. The optical film of claim 3, wherein portions of the coating layer other than the portions on which the marks are to be formed are etched to form the dot pattern.

6. The optical film of claim 1, wherein the coating layer is formed by cross-stacking at least two material layers having different refractive indexes, and
a refractive index of the coating layer is determined by refractive indexes of the at least two material layers.

7. The optical film of claim 1, wherein the coating layer has a function of reflecting infrared light having a wavelength of 800 nm to 1500 nm.

8. The optical film of claim 2, wherein one surface of the matching layer and one surface of film layer are in contact with each other, and an adhesive is applied onto another surface of at least one of the matching layer and the film layer.

9. The optical film of claim 2, wherein the matching layer comprises an adhesive composition.

10. The optical film of claim 1, wherein the fine structures have a hemispherical shape, a reversed hemispherical shape, a prism shape, or a triangular pyramid shape.

11. A digital pen system comprising:
a display;
an optical film provided on the display,
wherein the optical film comprises:
a film layer having fine structures thereon; and
a coating layer coated on the fine structures to form a dot pattern and having a feature of scattering infrared light; and
a digital pen configured to recognize the dot pattern and transmit a signal for displaying graphic information on the display.

12. The digital pen system of claim 11, wherein the optical film further comprises a matching layer stacked above or below the film layer and having a refractive index matched to a refractive index of the film layer within a predetermined range of errors.

13. The digital pen system of claim 11, wherein the dot pattern comprises:
virtual grid lines; and
marks.

14. The digital pen system of claim 13, wherein portions of the coating layer on which the marks are to be formed are etched to form the dot pattern.

15. The digital pen system of claim 13, wherein portions of the coating layer other than the portions on which the marks are to be formed are etched to form the dot pattern.
